# FASCICULE DE BREVET EUROPEEN

(11) **EP 3 326 794 B1**
(45) Date de publication et mention de la délivrance du brevet: **24.04.2019**
(21) Numéro de dépôt: 17020423.4
(22) Date de dépôt: 17.09.2009
(51) Int. Cl.: B31B 50/04, B31B 50/54, B31B 50/26

(54) **DISPOSITIF DE TRANSPORT ET DE PLIAGE DE DÉCOUPES**
TRANSPORT- UND FALTVORRICHTUNG FÜR ZUSCHNITTE
DEVICE FOR TRANSPORTING AND BENDING CUT-OUTS

(30) Priorité: 30.09.2008 EP 08017185
(43) Date de publication de la demande: 30.05.2018
(62) Demande divisionnaire de: 09778573.7
(73) Titulaire: BOBST MEX SA, 1031 Mex (CH)
(72) Inventeur: Favre, Olivier, 1030 Bussigny (CH); Criblez, Pascal, 1036 Sullens (CH)
(74) Mandataire: Ehnle, Marcus

(56) Documents cités:
- DE-A1- 19 535 903
- US-A- 4 018 144

## Description

### Domaine technique

La présente invention concerne un dispositif de pliage d'éléments en plaque de faible masse spécifique comme par exemple des découpes de papier, de carton, de carton ondulé ou de plastique.

L'invention concerne une machine plieuse-colleuse, c'est-à-dire une machine transformant des éléments en plaque de faible masse spécifique, telles que des découpes de papier, de carton, de carton ondulé ou de plastique, en des boîtes pliées.

### État de la technique antérieure

Pour fabriquer, par exemple, une boîte dite classique, la découpe utilisée comporte quatre lignes de pliage longitudinales et deux lignes de pliage transversales définissant des panneaux longitudinaux et des pattes transversales. Pour ce type de boîte, seuls les panneaux longitudinaux sont pliés dans la machine plieuse-colleuse, les pattes transversales sont pliées en dehors de la plieuse-colleuse. Par pattes transversales, on entend les pattes se pliant suivant les lignes de pliage transversales.

Il est un autre exemple de boîtes utilisant le même type de découpe où les pattes avants, à l'instar des panneaux longitudinaux, sont pliées dans la machine plieuse-colleuse, ce sont les boîtes dites à fond automatique. Par pattes avants, on entend les pattes transversales avales.

Les boîtes classiques ainsi que les boîtes à fond automatique sont généralement fabriquées dans les mêmes machines plieuses-colleuses. Une plieuse-colleuse comprend une suite de stations de travail, notamment, un margeur alimentant la production des boîtes découpe par découpe à partir d'une pile, un module d'alignement, un casseur précassant les première et troisième lignes de pliage longitudinales de la découpe entre 90º et 180º, un module de pliage apte à plier à 180º les pattes avants de la découpe, une station d'encollage, un plieur pour le pliage des deuxième et quatrième lignes de pliage longitudinales de la découpe, un presseur qui comprime les deuxième et quatrième lignes de pliage longitudinales et dépose les boîtes en nappe, et enfin un module de réception qui reçoit les boîtes tout en les maintenant pressées pour permettre à la colle de sécher. Le convoyage des découpes d'une station à une autre se fait à l'aide de transporteurs à courroies qui, par friction, saisissent les découpes entre un transporteur inférieur et un transporteur supérieur. Traditionnellement, le transporteur inférieur est muni de courroies inférieures tandis que le transporteur supérieur est muni, soit de courroies supérieures, soit de galets d'appui supérieurs. Les points de contact du transporteur inférieur avec le transporteur supérieur définissent le trajet de convoyage des découpes.

En variante, les découpes peuvent être maintenues contre les courroies du transporteur inférieur sans l'aide de transporteur supérieur. Des exemples de dispositif de transport de découpes sans transporteur supérieur sont décrits dans les brevets US4108302 et WO9714634. Dans ce dispositif connu, le transporteur inférieur est un transporteur à courroies classiques coopérant avec une chambre à vide. Un autre exemple de dispositif de transport de découpes sans transporteur supérieur est décrit dans le brevet US4614512. Dans ce dispositif connu, le transporteur inférieur est un transporteur à courroies munies d'éléments aspirants.

Le transporteur inférieur comprend généralement plusieurs longerons longitudinaux supportant chacun une courroie de transport sans fin guidée par des poulies et des galets. Chaque longeron est monté en coulissement latéral au travers de paliers le long d'une ou plusieurs glissières de déplacement fixées transversalement entre deux bâtis longitudinaux. Afin d'adapter la position latérale des longerons en fonction du format des découpes à traiter, le déplacement latéral de chaque longeron est assuré par une ou plusieurs vis parallèles montées en rotation entre les bâtis, les parties filetées des vis étant respectivement engagées dans des orifices taraudés transversaux des longerons.

Le pliage d'une patte avant s'effectue généralement grâce à un dispositif comportant un ou plusieurs crochets élastiques suspendus à une traverse placée au dessus du plan de passage des découpes, l'extrémité inférieure de ces crochets pénétrant dans le plan de passage des découpes, voir par exemple le brevet US3285144.

Dans certain cas, toutefois, une solution évitant de placer des organes de pliage en travers du passage des découpes s'est avérée plus simple, voire même nécessaire, ce qui a conduit à l'emploi de buses convenablement dirigées, projetant un jet d'air comprimé contre la patte à plier. Le jet d'air servant à amorcer le pliage de la patte avant, pliage se terminant ensuite à l'aide d'éléments rigides ne se trouvant alors plus dans la trajectoire des découpes proprement dite.

On connaît également des dispositifs de pliage où les buses précitées sont remplacées par des doigts de levée situés sous le plan de passage des découpes, ces doigts étant animés d'un mouvement alternatif de va-et-vient, voir par exemple le brevet US4052932.

Dans le brevet US4018144 il est proposé de plier la patte avant d'une découpe en faisant passer ladite découpe dans un transporteur à courroies dont une section est convexe. Un transporteur de ce type comprend successivement d'amont en aval : une section horizontale, une section concave, une section convexe, une section concave et une section horizontale. Lorsque la patte avant à plier passe dans la section convexe du transporteur, elle se projette hors du trajet de convoyage convexe dans une direction sensiblement tangente à ce trajet. Un crochet de pliage élastique suspendu à une traverse est placé au dessus de la section convexe dans ladite direction de projection de la patte. Ainsi, le passage de la découpe dans la section convexe amène immanquablement la patte avant contre le crochet de pliage élastique.

Dans le brevet DE19535903 il est également proposé de plier la patte avant d'une découpe en faisant passer ladite découpe dans un transporteur à courroies dont une section est convexe. Ce dispositif de pliage se distingue du dispositif décrit dans le brevet US4018144 en ce que l'organe de pliage n'est pas élastique. De plus, au contraire du dispositif décrit dans le brevet US4018144, ce dispositif de pliage n'est pas adapté pour plier des découpes séparées les unes des autres. En effet, bien que la patte avant à plier se projette hors du trajet de convoyage dans la section convexe du transporteur, la direction de projection de la patte avant est pratiquement normale audit trajet lorsque la découpe passe sous l'organe de pliage, de sorte que le passage de la découpe dans la section convexe n'amène pas automatiquement la patte avant contre l'organe de pliage, il faut l'intervention d'un opérateur. Quand les découpes arrivent en nappe, il suffit que l'opérateur amène la patte avant de la première découpe contre l'organe de pliage pour guider les découpes suivantes de la nappe vers l'organe de pliage. Par contre, quand les découpes arrivent séparées les unes des autres, l'opérateur doit amener manuellement la patte avant de chaque découpe contre l'organe de pliage.

Les dispositifs de pliage nécessitant l'intervention d'un opérateur pour amener manuellement la patte d'une découpe contre l'organe de pliage ne sont pas satisfaisants car ils ralentissent la production des boîtes.

Dans les dispositifs de pliage utilisant un organe de pliage mobile pour plier la patte avant (crochet de pliage élastique, doigt de levée, etc.), le mouvement de l'organe mobile entre une position de repos et une position de travail est synchronisé avec le passage des découpes, ainsi, plus la vitesse de passage des découpes est grande et plus le temps nécessaire à l'organe mobile pour passer alternativement d'une position à l'autre est court. Tant qu'on ne désire pas travailler à très grande vitesse, l'organe mobile a le temps de passer de la position de repos à la position de travail. Il n'en va pas de même lorsqu'on désire travailler à très grande vitesse, c'est-à-dire en imposant à la découpe une vitesse de convoyage supérieure à deux cents mètres par minute. Lors d'essais pratiques à cette vitesse, on a remarqué que l'organe mobile n'avait pas le temps de traiter toutes les découpes. En effet, dans le cas d'un crochet de pliage élastique, le choc quasi-continu des pattes avant contre l'extrémité inférieure du crochet ne laissait pas le temps au crochet de retomber entre toutes les découpes, ce qui occasionnait des défauts de pliage. De même, dans le cas d'un doigt de levée, la vitesse de va-et-vient du doigt était limitée par la conception même de l'organe mobile, en particulier, la limite de résistance mécanique des pièces constituant l'organe mobile.

Dans les dispositifs de pliage utilisant de l'air comprimé, il est nécessaire de prévoir toute une installation pneumatique incluant compresseur, vannes, tuyaux, buses, etc., une telle installation consomme beaucoup d'énergie pour produire de l'air comprimé, ce qui n'est pas satisfaisant. De plus, l'air sortant des buses constitue une importante source de bruit, ce qui est nuisible à l'environnement de travail.

Lorsqu'on désire fabriquer des boîtes classiques dans une plieuse-colleuse adaptée à la fabrication de boîtes à fond automatique, il est avantageux de pouvoir mettre le dispositif de pliage des pattes avants hors service pour éviter que les organes de pliage interfèrent avec les découpes lors de leur passage dans le module de pliage, interférence qui pourrait endommager les découpes ou ralentir la production des boîtes. C'est ainsi que la plupart des dispositifs de pliage de l'état de la technique offre la possibilité d'éloigner les organes de pliage du plan de passage des découpes. Néanmoins, dans un transporteur à courroies tel que décrit dans les brevets US4018144 et DE19535903, même s'il est possible d'éloigner le crochet de pliage élastique de la section convexe du transporteur, le passage obligé des découpes dans cette section convexe allonge le trajet de convoyage des découpes (comparé à un transporteur de même longueur mais de section horizontale), ce qui n'est pas satisfaisant en terme de productivité. De plus, une découpe qui passe dans deux sections concaves et une section convexe d'un transporteur tel que celui décrit dans le brevet US4018144 subit plusieurs flexions longitudinales qui peuvent déformer la découpe et la marquer. Dans le cas d'une découpe de carton ondulé, la déformation de la découpe peut casser la cannelure du carton ondulé.

### Exposé de l'invention

Un premier but de l'invention est de remédier aux inconvénients précités en proposant un dispositif de pliage de découpes de papier, de carton ou de plastique qui permet de travailler à très grande vitesse.

Un deuxième but de la présente invention est de proposer un dispositif de pliage de découpes comprenant un dispositif de transport configurable en fonction du type de boîtes produites.

A cet effet, l'invention a pour objet un dispositif de pliage selon la revendication 1.

Grâce au dispositif de pliage défini à la revendication 1, les pattes avants des découpes peuvent être pliées à haute vitesse sans risque de défaut de pliage ni de rupture mécanique des organes de pliage.

Grâce au dispositif de pliage défini à la revendication 1, la productivité est optimale quel que soit le type de boîtes produites.

En outre,
les découpes qui n'ont pas besoin d'être pliées
transversalement traversent le dispositif de pliage en suivant un trajet de convoyage horizontal ce qui évite de déformer et de marquer les boîtes produites, d'une part, et de ralentir leur production, d'autre part.

Enfin, les
découpes sont moins déformées et moins marquées lors du pliage des pattes avants.

D'autres objets et avantages de l'invention apparaîtront plus clairement au cours de la description d'un mode de réalisation, description qui va être faite en se référant aux dessins annexés.

Dans le but de définir quelques termes introduits dans la présente description et décrivant la position de certains éléments au sein de la plieuse-colleuse, on citera les appellations "côté conducteur" et "côté opposé conducteur" employées sans conteste pour faire référence à un côté désigné par rapport à l'axe médian longitudinal de la machine. Ce choix permet d'éviter toute confusion survenant avec les dénominations conventionnelles gauche et droite dépendantes du point de vue de l'observateur. Dans une optique semblable, on décrira l'orientation de certains mouvements ou certaines pièces par les termes usuels "longitudinal" et "transversal" se référant toujours à l'axe médian de la machine dont la direction est déterminée par celle du défilement des découpes. Enfin, on précisera aussi que les termes "amont" et "aval" font quant à eux référence au sens de défilement des découpes dans la plieuse-colleuse.

### Description sommaire des figures des dessins

La figure 1 est une vue en perspective d'un transporteur selon l'état de la technique ;
Les figures 2a-2c sont des vues en perspective d'une partie d'un dispositif de pliage selon l'état de la technique ;
Les figures 3a-3c sont des vues en perspective d'une partie d'un dispositif de pliage selon l'invention ;
Les figures 4 et 5 sont des vues d'une partie d'un dispositif de transport selon l'invention ;
La figure 6 est une vue en perspective d'un dispositif de transport selon l'invention.

### Meilleure manière de réaliser l'invention

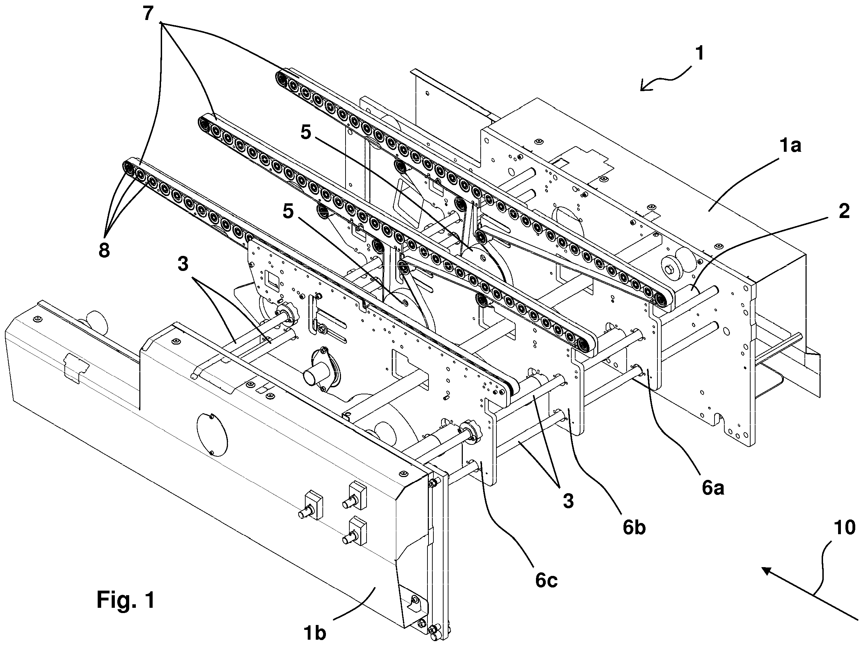

La figure 1 illustre un transporteur 1 selon l'état de la technique. La flèche 10 indique le sens de défilement des découpes aussi appelé le trajet de convoyage. Un tel transporteur comprend généralement deux bâtis longitudinaux 1a, 1b parallèles et distants l'un de l'autre. Chaque bâti présente deux grandes faces : une face intérieure et une face extérieure, la face intérieure d'un bâti étant tournée vers la face intérieure de l'autre bâti. Dans l'exemple, le bâti 1a est situé du côté opposé au conducteur et le bâti 1b est situé du côté conducteur. Entres les deux bâtis 1a, 1b sont disposés transversalement des glissières de déplacement cylindriques parallèles 2 (une seule glissière est représentée), des paires de vis de déplacement parallèles 3 et un arbre d'entraînement monté en rotation entre les deux bâtis (non représenté). Les glissières de déplacement 2 sont encastrées à chacune de leurs extrémités aux bâtis 1a, 1b, elles sont destinées à supporter trois longerons longitudinaux parallèles 6a, 6b, 6c montés côte-à-côte et supportant chacun une courroie de transport sans fin 7 reposant sur un plan dur horizontal, plan constitué par une série de galets supérieurs 8. Chaque longeron longitudinal est déplaçable transversalement entre les bâtis 1a, 1b, le long des glissières de déplacement 2, ceci en fonction du format des découpes à traiter.

Des dispositifs d'appui (non représentés) des découpes contre les courroies de transport 7 sont disposés au-dessus de certaines portions des longerons 6a, 6b, 6c. Ces dispositifs d'appui peuvent être constitués d'une série de galets maintenus abaissés par des ressorts ou d'une courroie sans fin dont le brin inférieur est appuyé vers le bas.

Pour modifier la position transversale des longerons 6a, 6b, 6c, ces derniers sont montés en liaison hélicoïdale avec les vis de déplacement 3. En effet, le mouvement transversal de chaque longeron est contrôlé par une paire de vis parallèles 3 dont les parties filetées sont respectivement engagées dans des orifices taraudés transversaux du longeron, lesquelles vis sont fixes en translation mais libres en rotation entre les bâtis 1a, 1b. Pour faire tourner les vis 3, un ou plusieurs moteurs électriques sont prévus (non représentés).

Chaque courroie de transport sans fin 7 est supportée par des galets et par une poulie motrice 5. Les poulies motrices 5 sont coaxiales et montées libres en rotation sur leur longeron respectif. Pour entraîner les courroies de transport 7, l'arbre d'entraînement présente une section hexagonale en coopération de forme avec un orifice transversal ménagé dans l'axe de chaque poulie motrice 5. Ainsi, quand un longeron 6a, 6b ou 6c se déplace latéralement sous l'action d'une paire de vis de réglage 3, il coulisse le long des glissières de déplacement 2 et le long de l'arbre d'entraînement.

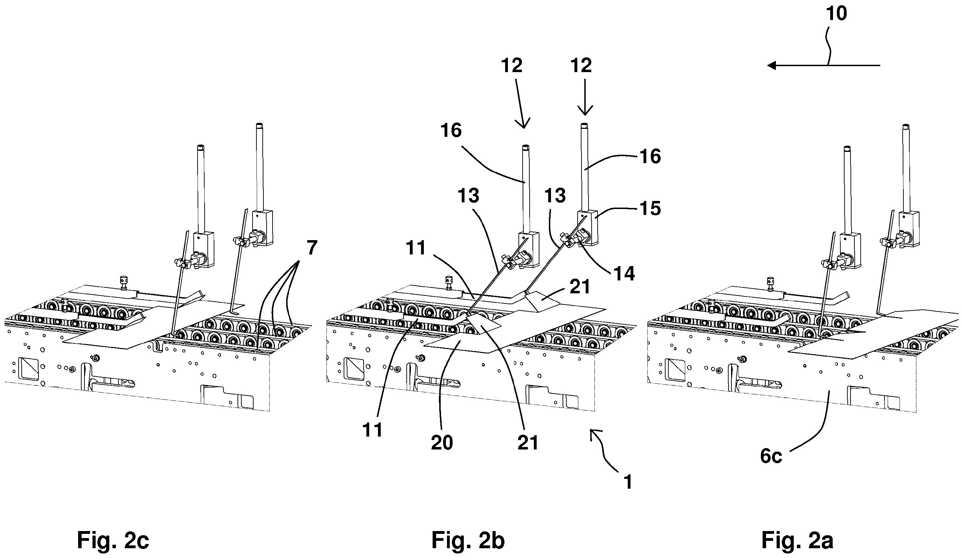

Les figures 2a à 2c illustrent un dispositif de pliage selon l'état de la technique. Ce dispositif comprend un transporteur 1 semblable à celui décrit en relation avec la figure 1, deux organes de pliage mobiles 12 suspendus à une traverse (non représentée) placée au dessus du plan de passage des découpes et deux guides supérieurs 11. Chaque organe de pliage 12 comprend un crochet de pliage élastique 13 constitué d'une lame métallique en forme de L. L'extrémité inférieure du crochet de pliage 13 est située dans le plan de passage des découpes tandis que l'extrémité supérieure du crochet de pliage est solidaire d'un arbre 14 pivotant dans un carter 15 autour d'un axe transversal. Une tige rigide 16 permet de fixer le carter 15 à la traverse. Un ressort de rappel logé dans le carter 15 exerce sur l'arbre 14 un couple qui tend à maintenir l'extrémité inférieure du crochet 13 dans le plan de passage des découpes, c'est par cette disposition que le crochet est dit élastique. Pour illustrer le mode opératoire, une découpe 20 avec deux pattes avants à plier 21 est représentée dans différentes phases de pliage. Dans la phase illustrée à la figure 2a, la découpe 20 arrive dans le dispositif de pliage suivant le sens de défilement 10. Les pattes avants 21 et les panneaux longitudinaux de la découpe sont sensiblement dans le même plan horizontal. L'extrémité inférieure des crochets de pliage 13 se trouve dans le plan de passage de la découpe 20 au droit des pattes avants 21.

Dans la phase illustrée à la figure 2b, la découpe passe sous les organes de pliage 12, en passant, les pattes avants 21 sont accrochées par l'extrémité inférieure des crochets de pliage 13. En continuant à avancer, les pattes 21 poussent sur les crochets 13. Sous l'effet de cette poussée, les crochets 13 s'éloignent du plan de passage de la découpe en pivotant sur leur axe transversal. Le pivotement des crochets provoque dans le même temps la mise en contrainte des ressorts logés dans les carters 15. Les pattes avants 21 amorcent un début de pliage en s'élevant au dessus du plan horizontal tandis que le reste de la découpe 20 est maintenu contre les courroies de transport 7 par tout moyen connu dans la technique, par exemple des dispositifs d'appui tels que décrits précédemment (non représentés).

Dans la phase illustrée à la figure 2c, la découpe 20 passe sous les guides supérieurs 11, ces guides sont des glissières rigides s'étendant dans le sens longitudinal, la fonction de ces guides est de terminer le pliage des pattes avants 21. En effet, lorsque les crochets 13 libèrent les pattes 21, celles-ci viennent prendre appui contre une partie marginale des guides supérieurs 11. Du fait de l'avance continue de la découpe 20, les pattes 21 terminent leur pliage en glissant sous les guides 11. Après avoir libéré les pattes 21, les crochets de pliage 13 sont ramenés dans le plan de passage des découpes sous l'action de leur ressort de rappel respectif.

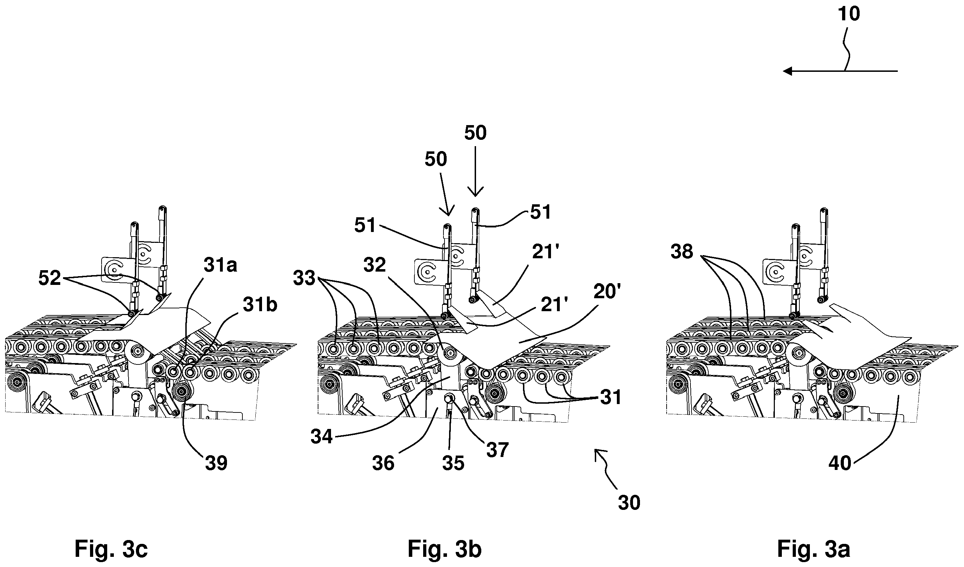

Les figures 3a à 3c illustrent un dispositif de pliage selon l'invention. A des fins de comparaison, le dispositif de pliage selon l'invention est représenté sensiblement dans la même position que le dispositif de pliage selon l'état de la technique illustré aux figures 2a-2c. Ce dispositif comprend un transporteur inférieur 30 qui se distingue du transporteur de l'état de la technique en ce que le plan dur sur lequel reposent les courroies de transport sans fin 38 est incurvé.

Dans l'exemple illustré aux figures 3a-3c, le plan dur du transporteur inférieur est constitué de préférence par une série de galets supérieurs 31, 31a, 31b, 32, 33. En considérant un longeron longitudinal 40 supportant une courroie de transport sans fin 38, les galets supérieurs 31, 31a, 31b sont situés en amont du longeron, les galets supérieurs 33 sont situés en aval du longeron et le galet supérieur 32 occupe une position intermédiaire entre les galets supérieurs amonts 31, 31a, 31b et avals 33. Les galets supérieurs amonts 31, 31a, 31b sont agencés de manière à former un plan dur horizontal. Le galet supérieur 32 est monté libre en rotation au sommet d'un bras sensiblement vertical 34. La partie du bras 34 située à l'opposé du galet supérieur 32 est bloquée dans une glissière 35 par une vis 37. La glissière 35 est constituée par une fente sensiblement verticale ménagée dans une platine 36 solidaire du longeron longitudinal 40. En étant bloqué en haut de la glissière 35, le bras 34 fait émerger le galet supérieur 32 au dessus du plan dur horizontal formé par les galets supérieurs amonts 31, 31a, 31b. Par cette disposition, le brin supérieur de la courroie de transport sans fin 38 est guidé en amont du longeron 40 par les galets supérieurs amonts 31 jusqu'à un galet 31b, ensuite la courroie 38 est déviée vers un galet de renvoi 39 situé sous le plan dur horizontal. Le galet 39 renvoie la courroie 38 vers le galet 31a situé en aval des galets supérieurs amonts 31. Enfin, le galet 31a guide la courroie 38 vers le galet supérieur 32 qui est décalé verticalement des galets supérieurs amonts 31, 31a, 31b de sorte que le trajet de convoyage présente une section incurvée.

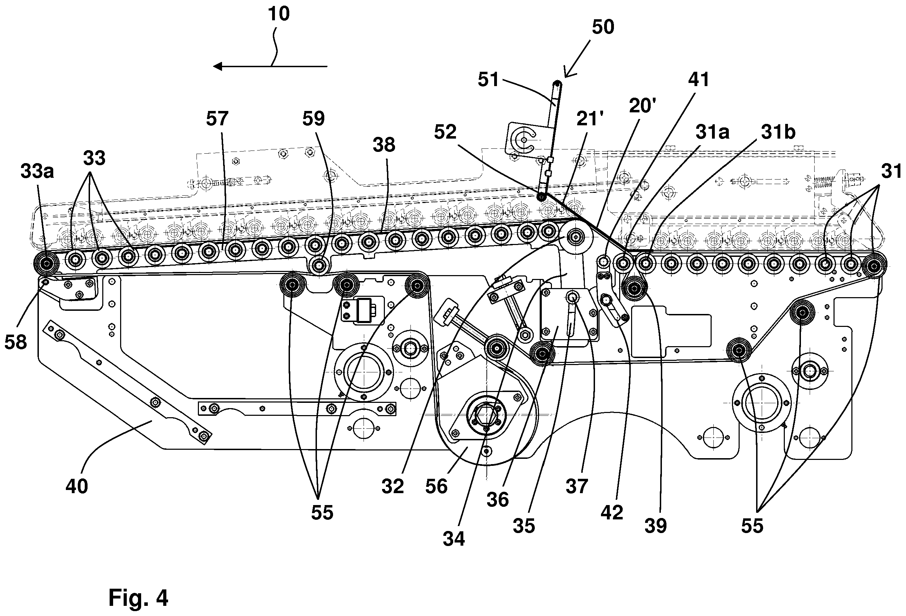

A la suite du galet décalé 32, la courroie 38 est guidée par les galets supérieurs avals 33 vers un galet 33a situé en aval des galets supérieurs avals 33 (voir figure 4). Le galet 33a est situé dans le même plan horizontal que les galets supérieurs amonts 31, 31a, 31b.

Avantageusement, le galet décalé 32 est situé dans le même plan que les galets supérieurs avals 33, 33a de sorte que le plan dur sur lequel reposent la courroie 38 en aval du longeron 40 est incliné. Par cette disposition, le transporteur inférieur comprend successivement d'amont en aval : une section horizontale, une section concave, une section convexe et une section plane inclinée. Grâce à cette disposition et, en particulier, grâce au fait qu'il n'y a qu'une section concave et qu'une section convexe, les découpes sont moins déformées.

Outre le transporteur inférieur 30, le dispositif de pliage selon l'invention comprend deux organes de pliage statiques 50 suspendus à une traverse (non représentée) placée au dessus du plan de passage des découpes. L'organe de pliage 50 est dit statique parce qu'il n'est animé d'aucun mouvement de travail. Chaque organe de pliage 50 est constitué d'une barre rigide 51 sensiblement verticale. L'extrémité supérieure de la barre 51 est fixée à la traverse tandis que l'extrémité inférieure de la barre 51 est située au dessus du galet décalé 32, en aval de ce dernier.

Pour illustrer le mode opératoire propre à l'invention, une découpe 20' avec deux pattes avants à plier 21' est représentée dans différentes phases de pliage. Dans la phase illustrée à la figure 3a, la découpe 20' arrive dans la section incurvée du transporteur inférieur 40. Des moyens connus maintiennent la découpe 20' contre les courroies de transport 38, ces moyens connus sont constitués par exemple par des dispositifs d'appui tels que décrits précédemment (non représentés). Ces dispositifs d'appui laissent libre les pattes avants à plier 21' de sorte que ces dernières ne sont pas maintenues contre les courroies 38. Ainsi, lorsque la découpe 20' passe dans la section incurvée, les pattes avants 21' se projettent hors du trajet de convoyage incurvé dans une direction sensiblement tangente à ce trajet.

Dans la phase illustrée à la figure 3b, la découpe 20' passe sous les organes de pliage 50, en passant, les pattes avants 21' sont interceptées par les barres rigides 51 placées dans la direction de projection des pattes avants 21'. La figure 4 illustre cette phase dans une vue de face côté conducteur.

Dans la phase illustrée à la figure 3c, la découpe 20' continue son avance. Du fait que les organes de pliage 50 sont statiques, les pattes 21' sont forcées de pivoter autour des points de contact des pattes 21' avec les barres 51. Par cette disposition, un pliage des pattes avants 21' est réalisé. Pour terminer le pliage, la découpe 20' passe ensuite sous des guides supérieurs tels que décrits précédemment (non représentés).

Avantageusement, un galet 52 est monté libre en rotation à l'extrémité inférieure de chaque barre 51 afin de limiter le frottement des pattes avants 21' avec l'organe de pliage 50.

La figure 4 montre une vue détaillée d'un longeron longitudinal 40 d'un dispositif de transport selon l'invention. Outre les éléments déjà décrits en relation avec les figures 3a-3c, le longeron longitudinal 40 comprend des galets inférieurs 55 et une poulie motrice 56. Le brin inférieur de la courroie de transport sans fin 38 est guidé par les galets inférieurs 55, la poulie 56 entraîne la courroie par friction. Avantageusement, le galet décalé 32 et les galets supérieurs avals 33, 33a sont montés sur une même rampe 57. La rampe de galets 57 est apte à pivoter autour d'un axe transversal 58 jouxtant le galet 33a. Avantageusement encore, le bras 34 est solidaire de la rampe 57 de sorte que le galet décalé 32 se trouve au sommet de l'angle formé par le bras 34 et la rampe 57. De préférence, une pièce en forme de L constitue le bras 34 et la rampe 57.

Avantageusement encore, un galet 41 monté sur un bras articulé 42 est agencé de manière à pouvoir être situé dans le même plan que le galet supérieur 31a et le galet décalé 32. Par cette disposition, le plan dur incurvé formé dans la section incurvé peut être renforcé.

Des dispositifs d'appui tels que décrits précédemment sont représentés en traits fantômes.

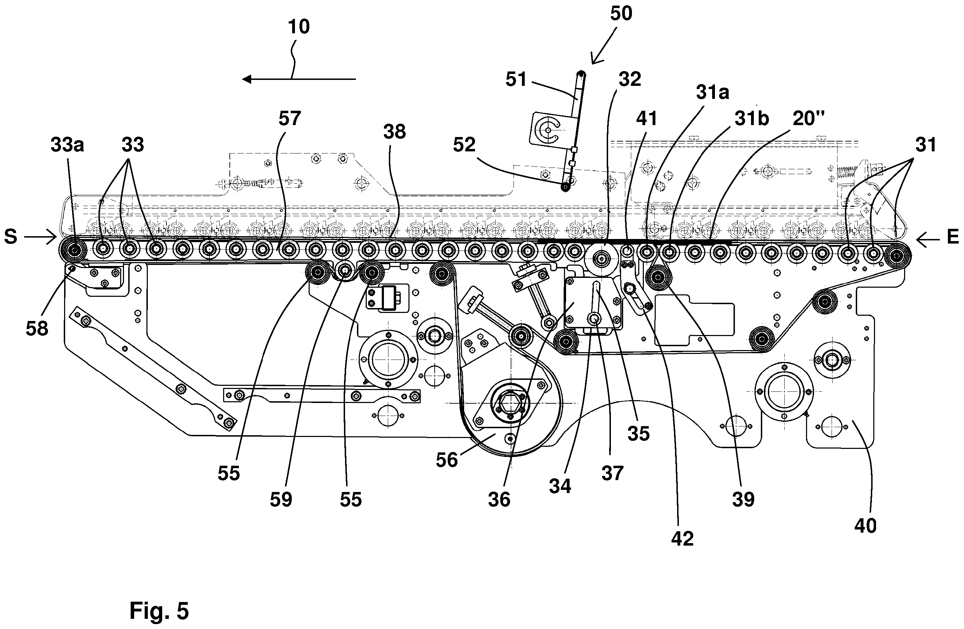

La Figure 5 montre le longeron longitudinal 40 dans une seconde configuration. Cette seconde configuration permet aux découpes qui n'ont pas besoin d'être pliées transversalement de traverser le module de pliage en suivant un trajet de convoyage horizontal. Par cette disposition, on évite de déformer inutilement les découpes et on raccourcit le trajet de convoyage des découpes à travers le module de pliage.

Dans la nouvelle configuration du longeron illustrée à la figure 5, la rampe de galets 57 affecte une position horizontale de sorte que les galets supérieurs amonts 31, 31a, 31b, le galet supérieur 32 et les galets supérieurs avals 33, 33a sont tous situés dans un même plan horizontal. Une découpe 20" est représentée passant en dessous de l'organe de pliage 50. La découpe 20" est une découpe de boîte classique, c'est-à-dire qu'elle ne nécessite pas d'être pliée transversalement dans le module de pliage, ainsi, lorsque la découpe 20" arrive à l'entrée E du module de pliage, elle est directement convoyée vers la sortie S du module de pliage en suivant un trajet de convoyage horizontal.

Dans cette configuration, la distance qui sépare l'extrémité inférieure de la barre 51 du plan de passage des découpes étant largement supérieure à l'épaisseur d'une découpe, il n'y a pas d'interférence du dispositif de pliage avec les découpes 20". Avantageusement le galet 41 est agencé de manière à pouvoir être situé dans le même plan que le galet supérieur 31a et le galet supérieur 32. Par cette disposition, le plan dur horizontal peut être renforcé.

Pour amener le longeron 42c dans la seconde configuration, le galet supérieur 32 est réglable en hauteur. En effet, en débloquant le bras 34 bloqué en haut de la glissière 35 (voir figure 4), le bras 34 est amené en bas de la glissière 35. Lorsque le bras 34 est en bas de la glissière 35, le galet supérieur 32 monté au sommet du bras 34 est situé dans le même plan horizontal que les galets supérieurs amonts 31, 31a, 31b. Simultanément, la rampe de galets 57 est amenée dans une position horizontale en pivotant sur son axe transversal 58. Dans cette position initiale, tous les galets supérieurs se situent dans un même plan horizontal de sorte que le trajet de convoyage 10 est horizontal.

Avantageusement, un galet de rattrapage 59 monté sur la rampe 57, sous les galets supérieurs avals 33, coopère avec une paire de galets inférieurs 55 pour rattraper le jeu créé dans la courroie de transport sans fin 38 lors du pivotement de la rampe 57.

Pour ramener le longeron 42c dans la première configuration illustrée par la figure 4, il suffit de bloquer le bras 34 dans la glissière 35 à la hauteur souhaitée. Bien que la figure 4 montre le bras 34 en haut de la glissière 35, il est possible de bloquer le bras dans une autre position. La position finale du bras 34, et donc du galet supérieur 32, est déterminée par la géométrie des pattes avants à plier, en particulier la longueur. Dans la position finale, le galet supérieur 32 émerge au dessus du plan horizontal formé par les galets supérieurs amonts 31, 31a, 31b de sorte que le trajet de convoyage 10 est incurvé.

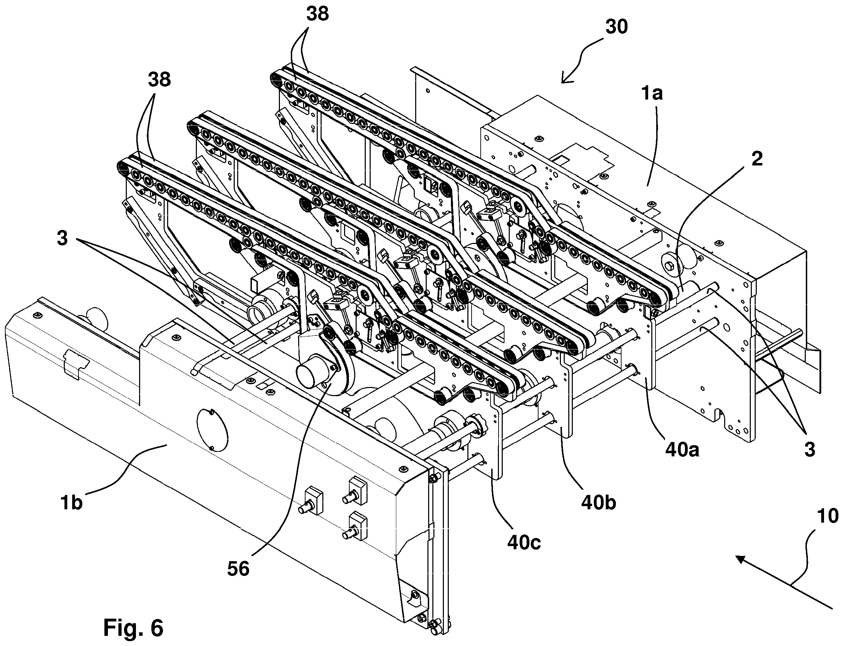

La figure 6 illustre un dispositif de transport selon l'invention. Les éléments communs au transporteur de l'état de la technique illustré à la figure 1 sont repris avec les mêmes références.

Un dispositif de transport selon l'invention comprend généralement deux bâtis longitudinaux 1a, 1b parallèles et distants l'un de l'autre. Chaque bâti présente deux grandes faces : une face intérieure et une face extérieure, la face intérieure d'un bâti étant tournée vers la face intérieure de l'autre bâti. Dans l'exemple, le bâti 1a est situé du côté opposé au conducteur et le bâti 1b est situé du côté conducteur. Entres les deux bâtis 1a, 1b sont disposés transversalement des glissières de déplacement cylindriques parallèles 2 (une seule glissière est représentée), des paires de vis de déplacement parallèles 3 et un arbre d'entraînement monté en rotation entre les deux bâtis (non représenté). Les glissières de déplacement 2 sont encastrées à chacune de leurs extrémités aux bâtis 1a, 1b, elles sont destinées à supporter trois longerons longitudinaux parallèles 40a, 40b, 40c montés côte-à-côte et présentant les mêmes caractéristiques que le longeron 40 décrit précédemment. Chaque longeron longitudinal est déplaçable transversalement entre les bâtis 1a, 1b, le long des glissières de déplacement 2, ceci en fonction du format des découpes à traiter.

Avantageusement, chaque longeron longitudinal 40a, 40b, 40c supporte une paire de courroies de transport sans fin 38, une première courroie est guidée le long du trajet de convoyage de préférence par des galets supérieurs montés sur le longeron côté conducteur et une deuxième courroie est guidée le long du trajet de convoyage de préférence par des galets supérieurs montés sur le longeron côté opposé conducteur. Par cette disposition, on assure un meilleur maintien des découpes pendant le pliage des pattes avants en augmentant les points d'appui des découpes sur les courroies du transporteur inférieur 30, en particulier dans la section incurvée.

Des dispositifs d'appui (non représentés) des découpes contre les courroies de transport 38 sont disposés au-dessus de certaines portions des longerons 40a, 40b, 40c. Ces dispositifs d'appui peuvent être constitués classiquement d'une série de galets maintenus abaissés par des ressorts ou d'une courroie sans fin dont le brin inférieur est appuyé vers le bas. Les portions des longerons au-dessus desquelles on ne trouve pas de dispositifs d'appui sont celles où on trouve les organes de pliage.

Les dispositifs d'appui précités ne sont qu'un exemple de moyens pour maintenir les découpes contre les courroies du transporteur inférieur le long du trajet de convoyage. En effet, selon l'état de la technique, les découpes peuvent être maintenues contre les courroies de transport 38 sans l'aide de dispositifs d'appui. Dans ce cas, le trajet de convoyage des découpes est défini par le trajet du brin supérieur de la courroie de transport sans fin 38.

Dans les exemples illustrés précédemment, les courroies du transporteur inférieur sont guidées le long du trajet de convoyage de préférence par des galets supérieurs montés libre en rotation, il va de soi que tout autre moyen de guidage des courroies comprenant une partie décalée verticalement ou réglable en hauteur fait partie de l'invention. Par exemple, des guides en plastique sur lesquels les courroies glissent sans frottement.

Enfin, bien que les exemples illustrés précédemment montrent des découpes arrivant dans le module de pliage séparées les unes des autres, l'invention s'applique aussi à des découpes arrivant en nappe, c'est-à-dire en se chevauchant l'une l'autre.

## Revendications

1. Dispositif de pliage d'éléments en plaque de faible masse spécifique comprenant un transporteur inférieur (30) apte à convoyer lesdits éléments en plaque le long d'un trajet de convoyage (10), ledit transporteur inférieur (30) comprend au moins un longeron longitudinal (40a, 40b, 40c) supportant au moins une courroie de transport sans fin (38) guidée le long du trajet de convoyage (10) par des moyens de guidage supérieur (31, 31a, 31b, 32, 33, 33a), le dispositif de pliage comprend en outre au moins un organe de pliage (50) d'une patte avant, **caractérisé en ce que** lesdits moyens de guidage supérieur sont ajustables entre une position initiale où lesdits moyens de guidage supérieur sont conformés de sorte que le trajet de convoyage (10) est horizontal et une position finale où lesdits moyens de guidage supérieur sont conformés de sorte que le trajet de convoyage est incurvé, et **en ce que** dans la position initiale, l'organe de pliage (50) n'interfère pas avec lesdits éléments en plaque, et **en ce que** dans la position finale, l'organe de pliage (50) est dans une position d'interception d'une patte avant.

2. Dispositif selon la revendication 1, **caractérisé en ce que** dans la position finale, le transporteur inférieur comprend une section convexe unique et une section concave unique.

3. Dispositif selon la revendication 1 ou 2, **caractérisé en ce que** le transporteur inférieur est apte à coopérer avec des dispositifs d'appui pour convoyer lesdits éléments en plaque le long dudit trajet de convoyage (10).

4. Dispositif selon l'une des revendications précédentes, **caractérisé en ce que** le longeron longitudinal (40a, 40b, 40c) supporte deux courroies de transport sans fin (38).

5. Dispositif selon la revendication 1, dans lequel les moyens de guidage supérieur (31, 31a, 31b, 32, 33, 33a) sont constitués par des galets supérieurs (31, 31a, 31b, 32, 33, 33a), **caractérisé en ce qu'**au moins un galet supérieur (32) est réglable en hauteur entre une position initiale où ledit galet réglable (32) est aligné avec les autres galets supérieurs de sorte que le trajet de convoyage (10) est horizontal et une position finale où ledit galet réglable (32) est décalé verticalement-des autres galets supérieurs de sorte que le trajet de convoyage est incurvé, et **en ce que** dans la position finale, l'organe de pliage (50) est suspendu au voisinage du galet décalé (32) dans une position d'interception d'une patte avant.

6. Machine plieuse-colleuse comprenant un dispositif de pliage défini selon l'une des revendications précédentes.

## Patentansprüche

1. Vorrichtung zum Falten von Plattenelementen mit einem geringen spezifischen Gewicht, umfassend einen unteren Förderer (30), der geeignet ist, die Plattenelemente entlang einer Förderbahn (10) zu befördern, wobei der untere Förderer (30) mindestens einen Längsträger (40a, 40b, 40c) umfasst, der mindestens ein Endlosförderband (38) trägt, das entlang der Förderbahn (10) durch obere Führungsmittel (31, 31a, 31b, 32, 33, 33a) geführt wird, wobei die Vorrichtung zum Falten ferner mindestens ein Organ zum Falten (50) einer vorderen Lasche umfasst, **dadurch gekennzeichnet, dass** die oberen Führungsmittel zwischen einer Anfangsposition, in der die oberen Führungsmittel angepasst sind, so dass die Förderbahn (10) horizontal ist, und einer Endposition der oberen Führungsmittel einstellbar ist, in der die oberen Führungsmittel angepasst sind, so dass die Förderbahn gekrümmt ist, und dass in der Anfangsposition das Organ zum Falten (50) die Plattenelemente nicht stört, und dass sich das Organ zum Falten (50) in der Endposition in einer Position zum Zurückhalten einer vorderen Lasche befindet.

2. Vorrichtung nach Anspruch 1, **dadurch gekennzeichnet, dass** der untere Förderer in der Endposition einen einzigen konvexen Abschnitt und einen einzigen konkaven Abschnitt aufweist.

3. Vorrichtung nach Anspruch 1 oder 2, **dadurch gekennzeichnet, dass** der untere Förderer geeignet ist, mit Stützvorrichtungen zusammenzuwirken, um die Plattenelemente entlang der Förderbahn (10) zu befördern.

4. Vorrichtung nach einem der vorhergehenden Ansprüche, **dadurch gekennzeichnet, dass** der Längsträger (40a, 40b, 40c) zwei Endlosförderbänder (38) trägt.

5. Vorrichtung nach Anspruch 1, wobei die oberen Führungsmittel (31, 31a, 31b, 32, 33, 33a) aus oberen Rollen (31, 31a, 31b, 32, 33, 33a) bestehen, **dadurch gekennzeichnet, dass** mindestens eine obere Rolle (32) in der Höhe zwischen einer Anfangsposition, in der die einstellbare obere Rolle (32) zu den anderen oberen Rollen so ausgerichtet ist, dass die Förderbahn (10) horizontal ist, und einer Endposition einstellbar ist, in der die einstellbare Rolle (32) von den anderen oberen Rollen vertikal versetzt ist, so dass die Förderbahn gekrümmt ist, und dass das Organ zum Falten (50) in der Endposition in der Nähe der versetzten oberen Rolle (32) in einer Position zum Zurückhalten einer vorderen Lasche aufgehängt ist.

6. Falt-Klebe-Maschine, umfassend eine Vorrichtung zum Falten, die nach einem der vorhergehenden Ansprüche definiert ist.

## Claims

1. Device for folding plate elements with a low specific mass comprising a bottom conveyor (30) able to convey said plate elements along a conveyance path (10), said bottom conveyor (30) comprises at least one longitudinal side member (40a, 40b, 40c) supporting at least one endless conveyor belt (38) guided along the conveyance path (10) by top means for guiding (31, 31a, 31b, 32, 33, 33a), the folding device also comprises at least one folding member (50) of a front tab, **characterised in that** said top means for guiding can be adjusted between an initial position where said top means for guiding are shaped in such a way that the conveyance path (10) is horizontal and a final position where said top means for guiding are shaped in such a way that the conveyance path is curved, and **in that** in the initial position, the folding member (50) does not interfere with said plate elements, and **in that** in the final position, the folding member (50) is in a position of intercepting a front tab.

2. Device according to claim 1, **characterised in that** in the final position, the bottom conveyor comprises a single convex section and a single concave section.

3. Device according to claim 1 or 2, **characterised in that** the bottom conveyor is able to cooperate with support devices in order to convey said plate elements along said conveyance path (10).

4. Device according to any of the preceding claims, **characterised in that** the longitudinal side member (40a, 40b, 40c) supports two endless conveyor belts (38).

5. Device according to claim 1, wherein the top means for guiding (31, 31a, 31b, 32, 33, 33a) are in the form of top rollers (31, 31a, 31b, 32, 33, 33a), **characterised in that** at least one top roller (32) can be adjusted in height between an initial position where said adjustable roller (32) is aligned with the other top rollers in such a way that the conveyance path (10) is horizontal and a final position where said adjustable roller (32) is vertically offset from the other top rollers in such a way that the conveyance path is curved, and **in that** in the final position, the folding member (50) is suspended in the vicinity of the offset roller (32) in a position of intercepting a front tab.

6. Folding-gluing machine comprising a folding device defined according to any of the preceding claims.
